**Europäisches Patentamt**

**European Patent Office**

**Office européen des brevets**

(19)

(11) Veröffentlichungsnummer : **0 050 227**
**B1**

(12) **EUROPÄISCHE PATENTSCHRIFT**

(45) Veröffentlichungstag der Patentschrift :
02.05.84

(51) Int. Cl.³ : **B 29 C 17/07**

(21) Anmeldenummer : **81107485.5**

(22) Anmeldetag : **21.09.81**

(54) **Vorrichtung zur Herstellung von Hohlkörpern.**

(30) Priorität : **21.10.80 DE 3039627**

(43) Veröffentlichungstag der Anmeldung :
**28.04.82 Patentblatt 82/17**

(45) Bekanntmachung des Hinweises auf die Patenterteilung : **02.05.84 Patentblatt 84/18**

(84) Benannte Vertragsstaaten :
**AT BE CH DE FR GB IT LI NL SE**

(56) Entgegenhaltungen :
**DE-A- 2 102 722**
**DE-B- 1 159 137**
**DE-B- 1 479 675**
**DE-B- 2 542 015**
**US-A- 3 825 396**

(73) Patentinhaber : **BASF Aktiengesellschaft**
**Carl-Bosch-Strasse 38**
**D-6700 Ludwigshafen (DE)**

(72) Erfinder : **Buehrle, Hans**
**An der Froschlache 23**
**D-6700 Ludwigshafen (DE)**
Erfinder : **Lohrbaecher, Volker**
**Kisslichstrasse 1**
**D-6940 Weinheim (DE)**
Erfinder : **Lindner, Edmund**
**Edenkobener Strasse 9**
**D-6700 Ludwigshafen (DE)**

## Vorrichtung zur Herstellung von Hohlkörpern

Die vorliegende Erfindung betrifft eine Vorrichtung zur Herstellung von Hohlkörpern aus thermoplastischen Kunststoffen gemäß dem ersten Teil des Anspruchs 1 (DE-B2-2 542 015).

Es ist bekannt, Hohlkörper nach dem Blasverfahren herzustellen, indem ein Schlauch aus warmplastischem Kunststoff (Vorformling) aus einer Ringdüse ausgestoßen, von einem Formwerkzeug umfaßt, durch Einblasen eines Druckmittels an die formgebende Innenfläche des Formwerkzeuges angelegt und dort abgekühlt wird.

Beim Umfassen durch das Formwerkzeug werden je nach Gestalt des herzustellenden Teiles einander gegenüberliegende Wandbereiche des warmplastichen Schlauches, insbesondere an den beiden offenen Enden, durch Schneid- und Quetschelemente derart gegeneinandergedrückt, daß sie miteinander verschweißen und somit eine geschlossene Naht des Fertigteiles bilden. Zur Herstellung dieser Quetschnähte ist eine Kraft erforderlich, die durch das Formwerkzeug während des Schließvorganges aufgebracht werden muß. Ihre Größe richtet sich nach der Länge der zu bildenden Naht und its abhängig von der Art des zu verarbeitenden Kunststoffes, seiner Temperatur und von der Wanddicke des Vorformings. Je Zentimeter Quetschnahtlänge wird eine Schließkraft von 200-600 N benötigt.

Ist das Formwerkzeug geschlossen, so entsteht durch den Druck des Aufblasens eine Auftriebskraft, deren Größe der auf die Aufspannplatte projizierten Formteilfläche, multipliziert mit dem Blasdruck entspricht.

Handelsübliche Blasformmaschinen sind im allgemeinen mit Schließkräften ausgestattet, die ausreichen, um die der Größe ihrer Werkzeugaufspannplatten entsprechenden Werkzeuge mit den sich dabei üblicherweise ergebenden Quetschnahtlängen zu schließen und den beim Aufblasen auftretenden Auftriebskräften standzuhalten.

Die Schließkraft einer handelsüblichen Maschine reicht aber nicht mehr aus, wenn darauf Blasteile mit extrem langen Quetschnähten und/ oder sehr großen projizierten Formteilflächen hergestellt werden sollen, selbst wenn die Maschine in der Lage wäre, den erforderlichen Vorformling in der gewünschten Zeit bereitzustellen.

In diesem Falle mußte bisher eine Maschine größerer und stärkerer Bauart gewählt werden, wodurch die Produktionskosten unerwünscht hoch wurden.

Nach DE-B2-2 542 015 ist es bekannt, bei der Schließeinheit einer Blasformmaschine (Blasformeinheit) durch eine im Zeitpunkt des Formschlusses oder kurz vor diesem Zeitpunkt kuppelnde, die Formhälften direkt oder indirekt verspannende Verriegelungseinheit ein ausgeglichenes Kräfteverhältnis herzustellen.

Diese Einrichtung soll bestimmungsgemäß erst im Zeitpunkt des Formschlusses oder kurz vorher wirken. Sie ist nicht geeignet, die gewünschte zusätzliche Schließkraft bereits dann zu liefern, wenn die Formhälften zum Bilden der Quetschnaht noch um die doppelte Wanddicke des Vorformlings voneinander entfernt sind.

Weiterhin ist nach DE-A-2 102 722 eine Vorrichtung zum Verriegeln der Formaufspannplatten einer Spritzgießmaschine bekannt, bei der die Schließ- und Zuhaltekraft mittels keilförmiger Riegelelemente erzeugt wird. Dieser Anmeldung ist nicht zu entnehmen, wie es sichergestellt ist, daß

— die Schließkraft schon vor Erreichen des Schließwegendes wirkt

— und wie die Gesamtheit der zum Aufbringen der Maschinenschließkraft erforderlichen Riegelelemente unter Aufbringung einer Schließkraft während eines bestimmten Schließweges einen Gleichlauf ihrer Schließbewegung erreicht.

Es war daher die Aufgabe der vorliegenden Erfindung, eine Einrichtung zu schaffen, mit der die Schließkraft einer Blasformmaschine zur Herstellung von Hohlkörpern aus thermoplastichen Kunststoffen, verstärkt werden kann, wobei die so erzeugte zusätzliche Schließkraft bereits vor Erreichen des Formschlusses verfügbar ist und mit der die Wege, die die Schließeinheit bei der Schließbewegung durchführt, an allen Stellen der Schließeinheit in gleichen Zeitabständen gleichgehalten werden können.

Die erfindungsgemäße Lösung der Aufgabe ist im kennzeichnenden Teil des des Anspruchs 1 beschrieben. Eine weitere Ansgestaltung der Erfindung ist im Anspruch 2 angegeben.

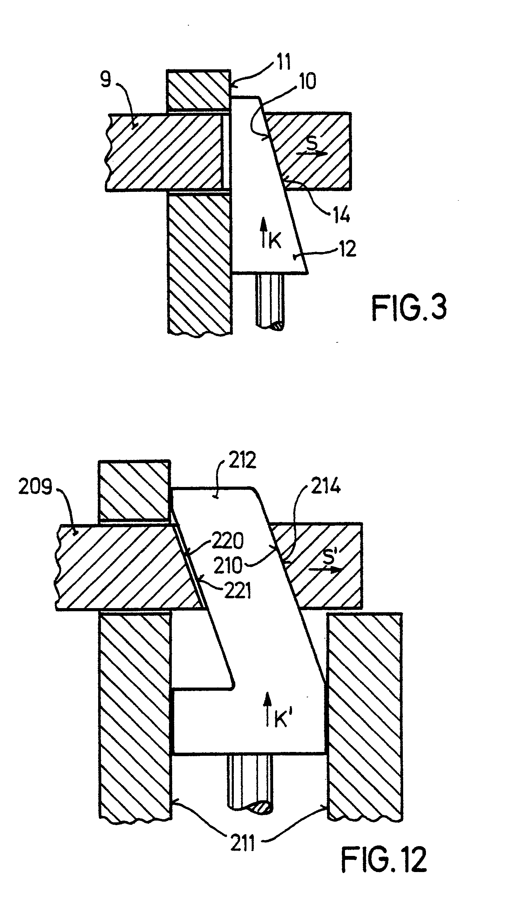

Ausführungsbeispiele des Erfindungsgegenstandes sind in Figur 1 bis Figur 11 dargestellt.

Figur 1 zeigt schematisch die Ansicht einer Blasformmaschine mit der erfindungsgemäßen Schließeinrichtung, die hier nur als Einzelelement dargestellt ist, aber in beliebig großer Anzahl angebracht werden kann.

Figur 2 zeigt die Vorrichtung gemäß Figur 1, jedoch in geschlossenem Zustand.

Figur 3 ist der Teilausschnitt X aus Figur 2.

Figur 4 zeigt ein Beispiel des Erfindungsgegenstandes, bei dem mehrere über dem Umfang des Werkzeuges verteilt angeordnete Vorrichtungen nach Figur 1 bzw. Figur 3 starr miteinander gekoppelt sind.

Figur 5 zeigt die Anordnung nach Figur 4, jedoch in geöffnetem Zustand.

Figur 6 ist der Schnitt A-A nach Figur 5.

Figur 7 ist die Ansicht in Pfeilrichtung B nach Figur 5.

Figur 8 ist die perspektivische Darstellung des Rahmens 115 mit den darauf angebrachten Verriegelungskeilen 112.

Figur 9 zeigt ein weiteres Ausführungsbeispiel des Erfindungsgegenstandes.

Figur 10 ist der Teilausschnitt Y aus Figur 9.

Figur 11 stellt die in Figur 9 gezeigte Vorrichtung in geöffnetem Zustand dar.

Figur 12 zeigt eine Variante von Figur 3, mit deren Hilfe auch eine Umkehrung der Kraftrichtung S ermöglicht wird.

Eine Blasformmaschine besteht im allgemeinen aus einer Plastifiziereinheit (Extruder) 1 mit einem daran angeschlossenen Strangpreßwerkzeug 2, mit dem ein warmplastischer schlauchförmiger Vorformling 3 hergestellt wird, und aus einer Schließeinheit, die das Formwerkzeug aufnimmt. Das Formwerkzeug 6 besteht im wesentlichen aus den beiden Hälften 4 und 5. Es dient zum Formen des Vorformlings 3 in die gewünschte Form des herzustellenden Hohlkörpers. Das Formwerkzeug 6 ist auf den in den angegebenen Pfeilrichtungen Z beweglichen Maschinenplatten 7 und 8 der Schließeinheit befestigt.

Der aus dem Strangpreßwerkzeug 2 ausgestoßene Vorformling 3 wird in der ersten Phase des Formungsvorganges von den beiden sich in Richtung der Kräfte P aufeinander zubewegenden Hälften 4 und 5 des Formwerkzeuges 6 erfaßt und zur Bildung der erforderlichen Schweiß- und Quetschnähte dazwischen eingeklemmt. Zu diesem Vorgang ist eine bestimmte Kraft (Schließkraft) erforderlich, die, bedingt durch die zwischen den Formhälften 4, 5 liegende doppelte Wanddicke des Vorformlings 3, bereits einsetzen muß, bevor der Schließvorgang beendet ist.

Nach dem Schließen des Werkzeuges wird durch eine nicht dargestellte Einblasvorrichtung ein Druckmittel, beispielsweise Druckluft, in den vom Formwerkzeug umschlossenen Vorformling eingebracht, wodurch er zu seiner endgültigen Gestalt aufgeweitet wird.

Hier entsteht eine weitere Kraft, die ebenfalls von den beiden Maschinenplatten 7 und 8 aufgebracht werden muß. Diese Kraft ist erst nach dem Schließen des Werkzeuges erforderlich ; sie dient zum Zuhalten (Zuhaltekraft) des Werkzeuges. Es sind bereits Vorrichtungen bekannt, mit denen nach dem Schließen des Werkzeuges die Werkzeughälften bzw. die Maschinenplatten miteinander verriegelt werden, so daß sie durch den nun eisetzenden Aufblasvorgang nicht auseinandergetrieben werden. Diese bekannte Vorrichtung ist aber nicht in der Lage, die Schließkraft während der Schließbewegung zu verstärken.

Die Erfindung setzt ein, wenn die Schließkraft während des Zufahrens und vor dem Erreichen des formschlusses einer Blasformmaschine nicht groß genug ist, um ein vorgegebenes Formteil herzustellen.

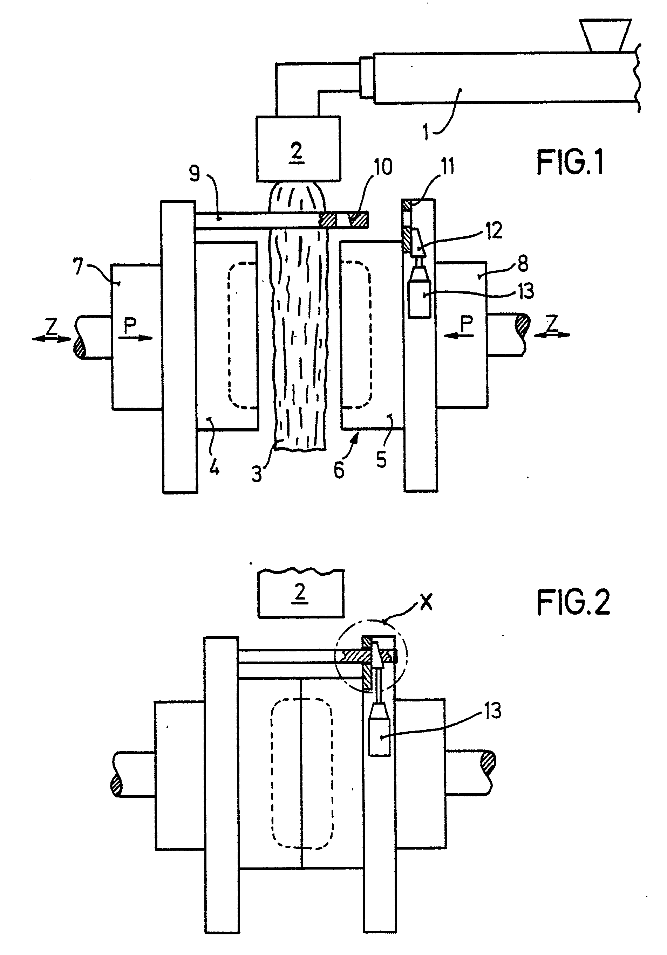

Nach einem Ausführungsbeispiel werden an den beiden Hälften 4 und 5 des Formwerkzeugs zusätzliche Schließeinrichtungen angebracht, die jeweils aus einer Zugstange 9 mit einer an deren freiem Ende angebrachten Keilfläche 10, einem auf einer Gleitbahn 11 verschieblichen Keil 12 und einer Betätigungseinrichtung 13 bestehen. Die Wirkungsweise dieser Einrichtung ist die folgende : Beim Schließen des Werkzeuges ist der Keil 12 entsprechend Figur 1 zurückgezogen, und zwar so lange, bis die Keilfläche 10 in den Wirkungsbereich der korrespondierenden Fläche 14 des Keiles 12 kommt. Nun wird der Keil 12 durch die Betätigungseinrichtung 13 in Pfeilrichtung K verschoben. Durch das Zusammenwirken der beiden Keilflächen 10 und 14 entsteht dabei eine Kraft in Pfeilrichtung S, die zusätzlich zu der Schließkraft P der Maschine wirkt und somit die auf das Werkzeug wirkenden Kräfte verstärkt. Diese Kraft setzt schon ein, bevor der Schließvorgang beendet ist. Vor dem Öffnen des Werkzeuges wird der Keil 12 entgegen der Pfeilrichtung K zurückgezogen ; das Werkzeug kann geöffnet werden. Mit dieser Einrichtung kann nur eine Kraft und eine Bewegung in Schließrichtung S erzeugt werden. Zum Unterstützen auch der Maschinen-Öffnungskraft dient eine in Figur 12 dargestellte Variante von Keil 212, Zustange 209 und Gleitbahn 211. Durch die beiden Flächen 210 und 221 des Keiles 212 und ihr Zusammenwirken mit den Keilflächen 214 und 220 der Zugstange 209 entstehen in der Zugstange auch Kräfte entgegen der Pfeilrichtung S', wenn der Keil 212 entgegen der Pfeilrichtung K' bewegt wird. Wegen der hier möglichen Umkehrung der Kraft S' muß der Keil 212 beidseitig in einer Doppelführung 211 geführt werden.

Ein gewisser Nachteil der bisher beschriebenen Ausführungen des Erfindungsgegenstandes ist darin zu sehen, daß die Bewegungen der einzelnen Schließeinrichtungen unabhängig voneinander sind. Es ist somit nicht sichergestellt, daß alle korrespondierenden Punkte der aufeinander zufahrenden Werkzeughälften stets die gleichen Abstände zueinander haben.

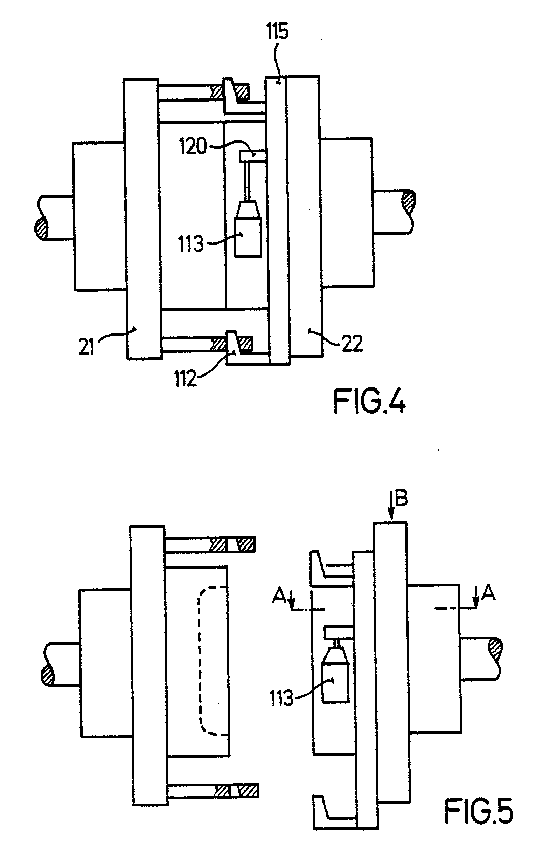

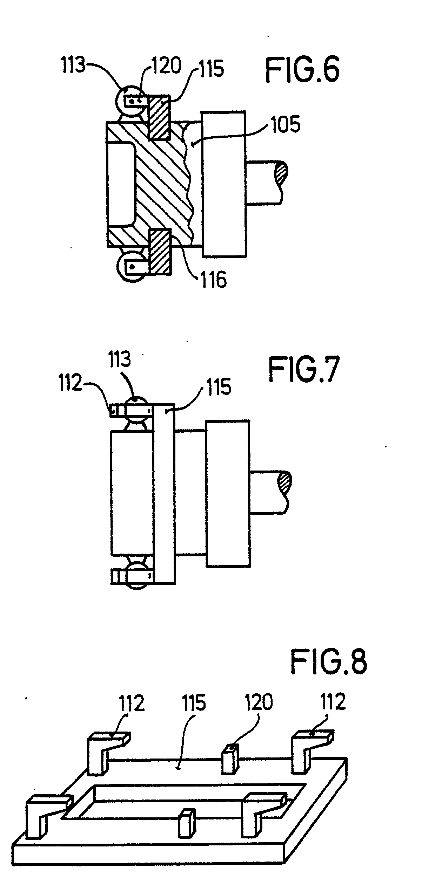

In einer weiteren Ausgestaltung der Erfindung (Figur 4 bis 8) wird daher die Vorrichtung derart erweitert, daß die Betätigung aller Schließeinrichtungen durch ein gemeinsames Betätigungselement, beispielsweise einen Schieberahmen 115, erfolgt. Dieser Rahmen ist in einer Gleitführung 116 verschieblich gelagert, die sich im Körper einer Hälfte 105 des Formwerkzeuges befindet. Er trägt sowohl die Keile 112 als auch die Mitnehmer 120, an denen die Betätigungseinrichtungen 113 angreifen.

Auf die Weise wird erreicht, daß alle Punkte der beiden Hälften des Formwerkzeuges während des Wirkens der Schließeinrichtung in gleichen Zeiten die gleichen Wege zurücklegen.

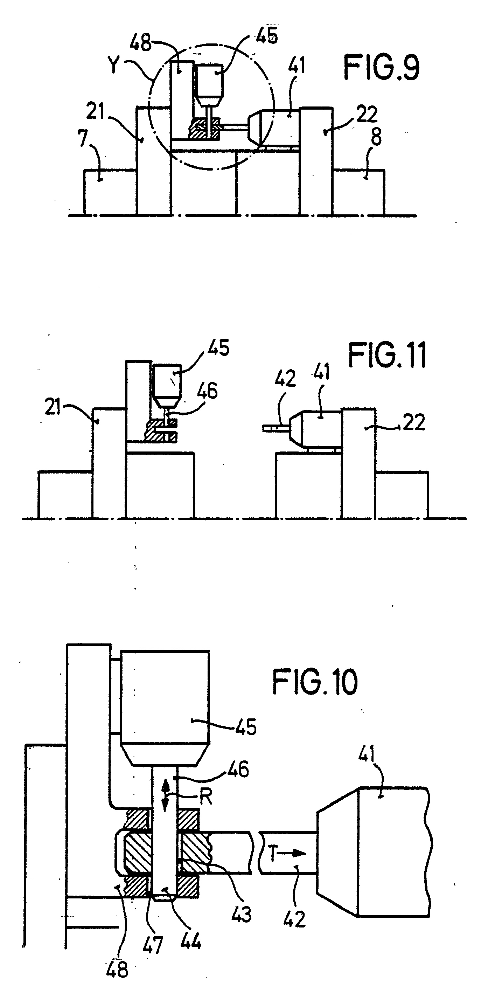

Auch bei dieser Vorrichtung ist es weitgehend möglich, die einzelnen Schließeinrichtungen an den Stellen des Formumfanges anzuordnen, wo die Schließ- bzw. Zuhaltekräfte vorwiegend gebraucht werden. Die beschriebene Vorrichtung zeigt selbstverständlich nur eine mögliche Ausführungsform einer erfindungsgemäßen Schließvorrichtung. Eine weitere Ausgestaltung ist in den Figuren 9 bis 11 beispielsweise dargestellt.

Hiernach ist eine weitere Schließvorrichtung (von mehreren, auf dem Werkzeug anzuordnenden ist nur eine dargestellt) dargestellt, die aus einer von einem Zugelement 41 betätigten Zugstange 42, die an ihrem der gegenüberliegenden Formhälfte 4 zugewandten Ende eine Verriegelungsbohrung 43 aufweist, besteht.

In diese Verriegelungsbohrung 43 kann ein Riegel 44 eingreifen, der seinerseits an einer von der Riegelbetätigung 45 bewegten Stange 46 befestigt ist. Der Riegel kann in Pfeilrichtung R verschoben werden. Dabei stellt er beim Einfahren in die Bohrung 47 einer Gabel 48 eine formschlüssige Verbindung der Gabel 48 mit der Zugstange 42 her. Das Herstellen dieser Verbindung erfolgt während der Zufahrtbewegung, sobald der Riegel 44 mit der Verriegelungsbohrung 43 fluchtet.

Nun kann das Zugelement 41 eine Kraft in Pfeilrichtung T ausüben und damit die auf die beiden Formhälften wirkende Schließ- und Zuhaltekraft verstärken. Beim Öffnen des Werkzeuges kann über das Zugelement 41 durch Umkehren der Kraftrichtung T eine Kraft auf die beiden Formhälften ausgeübt werden, die auch die Öffnungskraft der Maschinenschließeinheit verstärkt.

Während der Auffahrtbewegung wird der Riegel 44 aus der Verriegelungsbohrung 43 herausgezogen, so daß die Bewegung der Maschinenplatten ohne Unterbrechung weiterlaufen kann, wenn die mögliche Hubbewegung des Zugelementes 41 erschöpft ist.

Die Hublänge der Zugstange 42 im Zugelement 41 kann so groß sein, wie der Gesamthub, den die beiden Werkzeughälften vollführen. In diesem Fall braucht die Verriegelungseinrichtung 43 bis 48 nicht bei jedem Schließ- und Öffnungsvorgang betätigt zu werden.

Da jedoch die zusätzliche Schließ- bzw. Zuhaltekraft ausschließlich in der Endphase eines Schließhubes benötigt wird, ist es wirtschaftlich und räumlich vorteilhafter, die Hublänge der Zugstange 42 nur so groß zu machen, daß sie nach vollzogener Verriegelung noch einen Weg in Schließrichtung durchläuft, auf dem die über die Schließkraft der Maschine hinausgehende Zusatzkraft benötigt wird. Zweckmäßigerweise wählt man diese Weglänge so, daß sie etwa 0-10 mm größer ist, als die doppelte Wanddicke des Vorformlings beträgt.

Auch mit dieser Vorrichtung ist es möglich, zu erreichen, daß alle Punkte der beiden Werkzeughälften in gleichen Zeiten gleiche Wege zurücklegen. Es bieten sich hierfür beispielsweise allgemein bekannte Mittel der Hydraulik (Mengenteiler) oder der Elektronik (Weggeber usw.) oder eine mechanische Koppelung an.

Ganz allgemein ausgedrückt handelt es sich hier um eine ver- und entriegelbare Einrichtung, deren beide Hälften (z. B. 9 bzw. 48 einerseits und 11 bzw. 42 andererseits) mit Hilfe von Riegelelementen (z. B. 12, 112, 212 oder 44) wahlweise ver- und entriegelt werden können, und auf die nach dem Verriegeln Spannkräfte (z. B. mit den Teilen 12 und 13 oder 41 und 42) in der Weise aufgebracht werden, daß damit die Schließ- und ggf. auch die Öffnungskraft einer Presse verstärkt wird.

Die Zusatz-Schließeinrichtung oder der Schieberahmen können auch außerhalb des Werkzeuges entweder unmittelbar auf den Maschinenplatten 7, 8 oder auf einer zwischen den Maschinenplatten und den Werkzeughälften angeordneten Aufnahmeeinrichtung 21, 22 angebracht sein. Die Aufnahmeeinrichtung 21, 22 wird zweckmäßigerweise dann gewählt, wenn das Werkzeug 6 größer als die Maschinenplatten ist. Diese Schließeinrichtung ist nicht nur für Hohlkörperblasmaschinen anwendbar; sie ist auch bei allen anderen pressenartig wirkenden Formgebungseinrichtungen zu verwenden, bei denen die größte Preßkraft nicht während des ganzen Hubes, sondern vorzugsweise während eines Teiles des Gesamthubes benötigt wird. Das sind beispielsweise Pressen für die Metall- und Kunststoffverarbeitung und die keramische Industrie sowie Maschinen zum Tiefziehen (Vakuum- oder Druckluftformen) von Kunststoffen.

## Ansprüche

1. Vorrichtung zum Herstellen von Hohlkörpern aus thermoplastischen Kunststoffen mit einer Plastifiziereinheit (1) und mit einem daran angeschlossenen Strangpreßwerkzeug (2), mit dem ein warmplastischer schlauchförmiger Vorformling (3) hergestellt wird, sowie einem Formwerkzeug (6), das im wesentlichen aus zwei Formhälften (4, 5) besteht, die ihrerseits an beweglichen Maschinenplatten (7, 8) einer Schließeinheit befestigt sind, mit einer an den Maschinenplatten (7, 8) angeordneten zusätzlichen Schließeinrichtung, bestehend aus einer Zugstange (9 bzw. 209) mit einer an deren freiem Ende angebrachten Keilfläche (10 bzw. 210) und einem Verriegelungsglied (12 bzw. 212) mit einer Betätigungseinrichtung (13), dadurch gekennzeichnet, daß mindestens zwei Keile (112) durch ein gemeinsames Betätigungselement, beispielsweise einen Schieberahmen (115), so miteinander verbunden sind, daß sie gemeinsam in Wirkung gebracht werden und daß die Betätigungseinrichtung (13) so gesteuert ist, daß die Keile (112) zur Quetschnahtbildung am Hohlkörper bereits vor dem vollständigen Schließen der Formhälften (4, 5) in Eingriff gebracht werden.

2. Vorrichtung nach Anspruch 1, dadurch gekennzeichnet, das mindestens eine weitere Schließeinrichtung aus einer von einem Zugelement (51) betätigten Zugstange (42) besteht, die an ihrem der gegenüberliegenden Formhälfte (4) zugewandten Ende eine Verriegelungsbohrung (43) aufweist, in die ein Riegel (44) eingreifen kann.

## Claims

1. An apparatus for the production of hollow articles from thermoplastic materials, comprising a melting unit (1) and an extrusion die (2) connected thereto, with the aid of which die a hot, plastic, tube-shaped parison (3) is produced ; a mould (6) consisting essentially of two mould halves (4, 5) which in their turn are fastened to movable platens (7, 8) on a clamping unit ; and an additional locking device arranged on the platens (7, 8) and consisting of a tension rod (9, 209) having an inclined surface (10, 210) at its free end, and of a locking member (12, 212) with an actuating device (13), wherein at least two wedge-shaped members (112) are so connected together via a common actuating element , e.g. a displaceable frame (115), that they can be brought into action together, and wherein the actuating device (13) is so controlled that the wedge-shaped members (112) are caused to engage one another to form the pinched seams on the hollow article before the mould halves (4, 5) have completely closed.

2. An apparatus as claimed in claim 1, wherein at least one further locking device consists of a tension rod (42) which is actuated by traction means (41), and the end of which facing the opposite mould half (4) is provided with an opening (43) which a bolt (44) can enter.

### Revendications

1. Dispositif pour la fabrication de corps creux en matières thermoplastiques, comprenant une unité de plastification (1) avec une filière d'extrusion (2) raccordée, qui produit une ébauche tubulaire malléable à chaud (3), et avec un outil de formage (6), composé essentiellement de deux moitiés de moule (4, 5), fixées à des plaques mobiles (7, 8) d'une unité de fermeture, ainsi qu'un dispostif de fermeture additionnel, monté sur les plaques (7, 8) et composé d'une barre de traction (9 ou 209) avec une surface chanfreinée (10 ou 210) à son extrémité libre et un élément de verrouillage (12 ou 212) avec un organe de commande (13), caractérisé en ce qu'au moins deux coins (112) sont reliés par un organe de commande commun, par exemple un tiroir à coulisse (115), de manière à être actionnés simultanément, et l'organe de commande (13) est actionné de telle manière que les coins (112), destinés à réaliser les joints de pinçage du corps creux, sont amenés en position avant la fermeture complète des moitiés de moule (4, 5).

2. Dispositif suivant la revendication 1, caractérisé en ce qu'il comprend au moins un dispositif de fermeture supplémentaire, constitué d'une barre de traction (42) actionnée par un organe de traction (41) et comportant à son extrémité tournée vers la moitié de moule opposée (4) une forure de verrouillage (43), dans laquelle peut pénétrer un organe de blocage (44).

FIG.1

FIG.2

FIG.3

FIG.12

FIG.4

FIG.5

# FIG.6

# FIG.7

# FIG.8

FIG.9

FIG.11

FIG.10